Europäisches Patentamt

European Patent Office

Office européen des brevets

(11) Veröffentlichungsnummer: **0 318 735**
**A1**

## (12) EUROPÄISCHE PATENTANMELDUNG

(21) Anmeldenummer: **88118724.9**

(22) Anmeldetag: **10.11.88**

(51) Int. Cl.⁴: **F16L 25/00 , F24F 13/02**

(30) Priorität: **04.12.87 DE 8716031 U**

(43) Veröffentlichungstag der Anmeldung:
**07.06.89 Patentblatt 89/23**

(84) Benannte Vertragsstaaten:
**AT BE DE FR GB NL**

(71) Anmelder: **NABER & CO. KG**
**Enschedestrasse 30**
**D-4460 Nordhorn(DE)**

(72) Erfinder: **Naber, Hans-Joachim**
**Alkenstiege 7**
**D-4460 Nordhorn(DE)**

(74) Vertreter: **Baumann, Eduard, Dipl.-Phys.**
**Postfach 1201 Sattlerstrasse 1**
**D-8011 Höhenkirchen/München(DE)**

(54) **Anschlusstück für Kanäle.**

㊵ Ein Anschlußstück für Kanäle soll so ausgebildet werden, daß ein Anschluß an unterschiedliche Kanäle, Mauerkästen etc. möglich ist.

Hierzu ist ein Auflager (2) an einer Anschlußöffnung (3) zur Aufnahme eines kanalförmigen Anschlußstutzens mit einem dem Auflager angepaßten ringförmigen Rand vorgesehen. Für die Befestigung des Anschlußstutzens am ringförmigen Auflager (2) sind Befestigungsmittel (7) vorgesehen.

Fig. 1

## Anschlußstück für Kanäle

Die Erfindung bezieht sich auf ein Anschlußstück für Kanäle gemäß dem Oberbegriff des Anspruches 1.

Derartige Anschlußstücke werden zum Verbinden von Kanälen benutzt, speziell in der Entlüftungs- und Belüftungstechnik, beispielsweise von der Abzugshaube einer Küche zu einem Mauerkasten und von dort ins Freie. Ein Anschlußstück kann u.a. als Umlenkstück ausgebildet sein, und/oder es kann als Abzweigstück mit mehreren Öffnungen ausgebildet sein, und/oder die verschiedenen Öffnungen können unterschiedlichen Querschnitt haben, um beispielsweise den Anschluß eines flachen Kanales an einen Mauerkasten mit runder Öffnung zu ermöglichen.

Bisher ist es erforderlich, für jeden speziellen Zweck und für jeden speziellen Kanal ein spezielles Anschlußstück zu entwickeln, herzustellen und auf Lager zu halten.

Der Erfindung liegt das Problem zugrunde, ein Anschlußstück gemäß dem Oberbegriff des Anspruches 1 so auszubilden, daß ein Anschluß an unterschiedliche Kanäle, Mauerkästen etc. möglich ist.

Das Problem wird durch die Merkmale des Anspruches 1 gelöst. Weitere Ausgestaltungen der Erfindung sind in den Unteransprüchen unter Schutz gestellt.

Ein wesentlicher Aspekt der Erfindung liegt darin, das Anschlußstück aus zwei lösbar miteineinander verbundenen Teilen herzustellen, nämlich aus einem im wesentlichen rohrförmigen Hauptteil mit wenigstens zwei Anschlußöffnungen gleichen oder unterschiedlichen Querschnittes, die gleichachsig oder abgewinkelt zueinander angeordnet sein können sowie aus einem mit diesem Hauptteil lösbar verbundenen Anschlußstutzen.

Für die Realisierung der lösbaren Verbindung ist an wenigstens einer Anschlußöffnung des Hauptteiles ein Auflager vorgesehen, auf das ein ringförmiger Rand im Bereich einer Stutzenöffnung des kanalförmigen Anschlußstutzens paßt. Zwischen beiden soll eine gewisse Abdichtung stattfinden, wenngleich die Strömungsrichtung des Fluids, insbesondere der Abgase, zwischen Einzelstutzen und Hauptteil des Anschlußstückes so gewählt wird, daß das sogenannte Ofenrohrprinzip erfüllt ist, daß somit kein Druck des Fluids auf die Verbindungsnaht auftritt, der zu einem unerwünschten Austreten von Fluid in die Umgebung führen könnte.

Die lösbare Befestigung zwischen Auflager des Hauptteiles und ringförmigem Rand des Anschlußstutzens kann beliebig gewählt werden. Vorzugsweise werden jedoch symmetrisch angeordnete, beispielsweise vier um den Umfang verteilte Schnapphaken am ringförmigen Auflager vorgesehen, die mit dem Hauptteil einstückig ausgebildet sein können und axial leicht vorstehen und an ihren Enden Radial nach innen abgewinkelt sind. Entweder die Schnapphaken oder der Anschlußstutzen, der einen radialen ringförmigen Rand aufweist, oder beide, können eine gewisse Elastizität aufweisen, so daß der Rand, der beispielsweise radial nach außen vorsteht, unterhalb der Schnapphaken einschnappen kann. Statt dessen ist es auch denkbar, die Befestigungsmöglichkeiten zwischen Anschlußstutzen und Schnapphaken umzukehren, es sind gewisse anders konstruierte Schnapphaken denkbar, desgleichen kann auch der radiale Rand des Anschlußstutzens nach innen gerichtet sein und die Abwinkelung der Schnapphaken ist dann entsprechend radial nach außen gerichtet.

Die Schnapphaken können einstückig mit dem Anschlußstück ausgebildet sein. Während das Hauptteil für unterschiedliche Anwendungszwecke gleich sein kann, kann die dem weiterführenden Kanal zugewandte Stutzenöffnung im Prinzip ganz beliebigen Querschnitt aufweisen, sie kann beispielsweise rund, quadratisch, oval oder flach ausgebildet sein, um einen Anschluß an einen beliebigen Kanal zu ermöglichen.

In einer besonderen Ausführungsform kann zwischen Hauptteil des Anschlußstückes und Anschlußstutzen noch ein Paß- oder Reduzierstück vorgesehen werden, dessen Außenteil einem dem ringförmigen Rand des Anschlußstutzens entsprechenden äußeren Paßrand bildet, und dessen radial nach innen gerichtetes Innenteil ein dem Auflager entsprechendes Paß-Auflager für den ringförmigen Rand des Anschlußstutzens bildet. Dabei können am Paßauflager Befestigungsmitel für den Anschlußstutzen vorgesehen werden, vorzugsweise in Form einstückig mit diesem ausgebildeter Paßhaken. Dieses Paß- und Reduzierstück ermöglicht eine noch variablere Anpassung an unterschiedliche Kanalstücke, insbesondere auch eine einfache Reduzierung auch auf stark unterschiedliche Kanal-Querschnitte.

Ausführungsbeispiele der Erfindung sind in der Zeichnung beschrieben.

Es zeigt:

Fig. 1 eine Draufsicht auf das Hauptteil eines Anschlußstückes,

Fig. 2 einen Längsschitt durch das in Fig. 1 gezeigte Hauptteil,

Fig. 3 einen Anschlußstutzen für das Hauptteil des Anschlußstückes von der Seite,

Fig. 3a das zusammengefügte Anschlußstück im Längsschnitt, bestehend aus Hauptteil
und Anschlußstutzen,

Fig. 4 den in Fig. 3 gezeigten Anschlußstutzen von oben,

Fig. 5 ein anderes Ausführungsbeispiel eines
Anschlußstutzens zum Anschluß an rechteckige
Flachkanäle.

Fig. 6 die Draufsicht auf ein zusätzlich vorgesehenes Paß- oder Reduzierstück,

Fig. 7 den Querschnitt durch das in Fig. 6
gezeigte Paß- oder Reduzierstück.

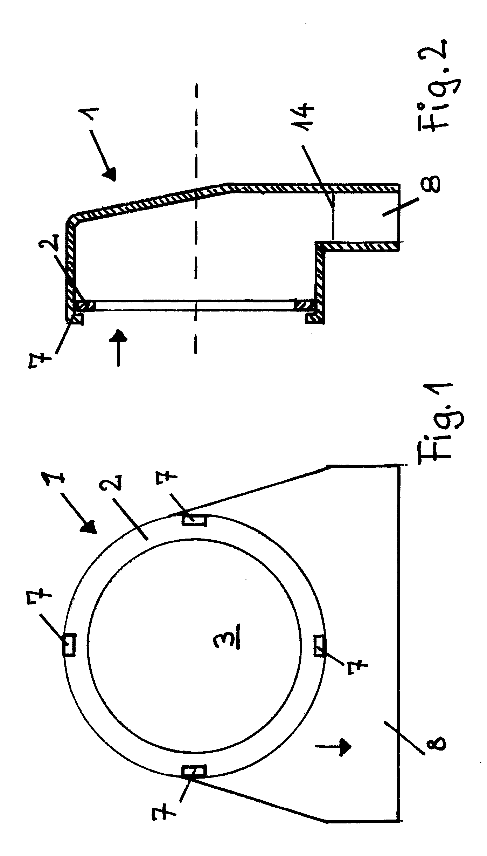

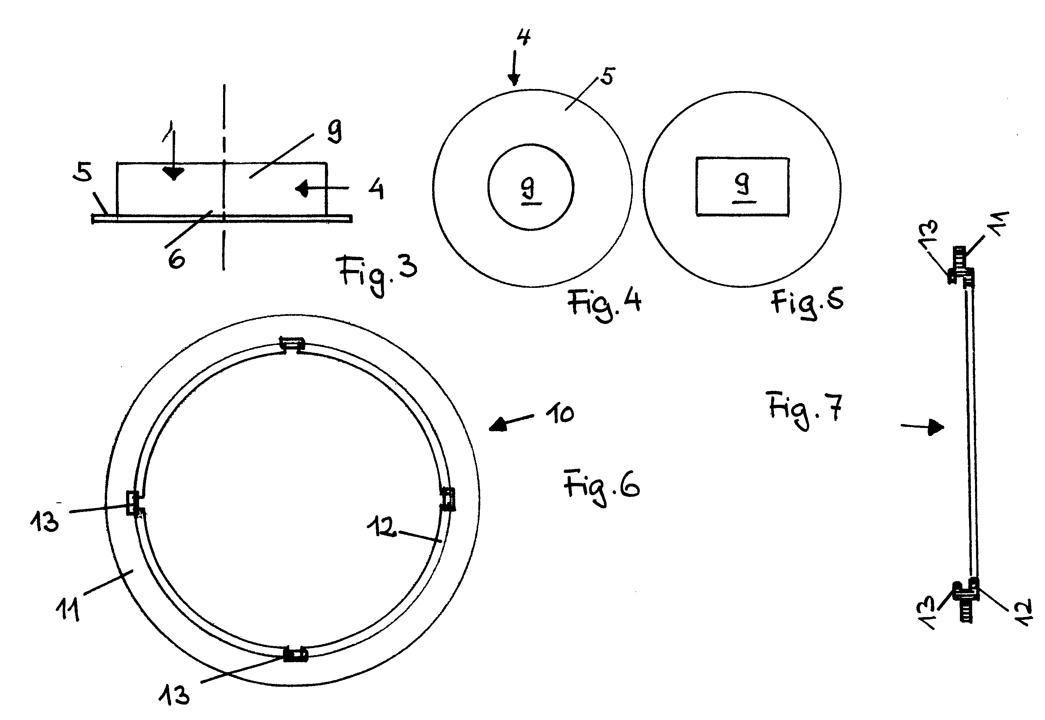

In der Zeichnung sind gleiche Teile mit gleichen Bezugszeichen versehen. In Fig. 1 ist ein
Hauptteil (1) eines Anschlußstückes für Kanäle in
Form eines rechtwinklig abgebogenen Umlenkstük-
kes gezeigt, wobei eine erste kreisrunde Anschlußöffnung (3) nach vorne ausgerichtet ist und eine
zweite Anschlußöffnung (8), die beispielsweise
flach und rechteckig sein kann, nach unten ausgerichtet ist. Die Flußrichtung ist durch einen Pfeil
angegeben. An der kreisförmigen Anschlußöffnung
(3) ist ein innerer Ring vorgesehen, der als Auflager (2) für einen entsprechend geformten Anschlußstutzen dienen kann. Weiterhin sind
Schnapphaken (7) zu erkennen, die in der Darstellung von Fig. 1 oberhalb des Auflagers (2) angeordnet sind und über einen Teil desselben radial
nach innen vorstehen.

In der Schnittdarstellung von Fig. 2 ist die
Form des Hauptteiles (1) des Anschlußstückes klarer zu erkennen, desgleichen die winkelförmig vorstehenden Schnapphaken (7), die in der Regel
symmetrisch um den Umfang der ersten Anschlußöffnung (3) verteilt sind und in der Regel drei bis
vier Schnapphaken umfassen. Im Inneren des
Hauptteiles (1) ist schematisch eine in Durchflußrichtung öffnende Jalousie (14) angegeben. Statt
dessen könnte auch ein motorgetriebener Ventilator angeordnet werden. Das Auflager (2) selbst ist
etwas ins Innere des Hauptteiles eingelassen und
schließt mit diesem bündig ab, während die
Schnapphaken (7) geringfügig überstehen. Auflager
(2) und Schnapphaken (7) sind vorzugsweise einstückig mit dem übrigen Hauptteil (1) ausgebildet.

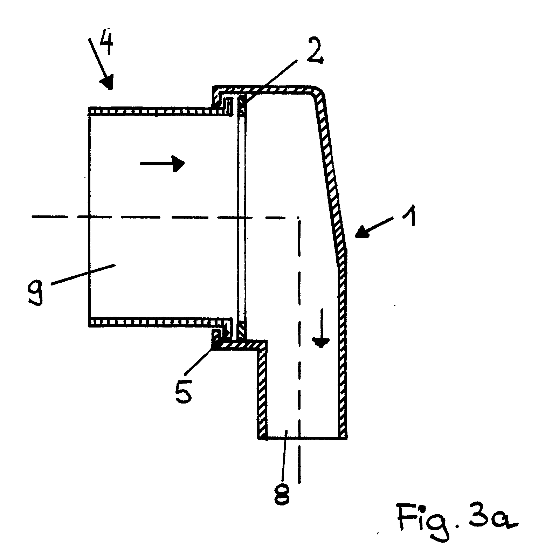

Fig. 3 zeigt die Seitenansicht eines Anschlußstutzens (4) mit einer dem (nicht gezeigten) Kanal
zugewandten Stutzenöffnung (9) und einer gegenüberliegenden Stutzenöffnung (6). Die letztere Stutzenöffnung (6) ist durch einen radial nach außen
sich erstreckenden ringförmigen Rand (5) abgeschlossen, der auf das Auflager (2) des Hauptteiles
(1) auflegbar ist, wobei die Schnapphaken (7) eine
lösbare Verbindung zwischen beiden Teilen bilden.

Fig. 3a zeigt im wesentlichen den in Fig. 2
gezeigten Längsschnitt durch ein Hauptteil (1) mit
aufgesetztem Anschlußstutzen. Hierbei kann die freie Stutzenöffnung (9) des Anschlußstutzens (4)
beispielsweise mit dem Ende eines Kanales, der
beispielsweise mit einer Küchen-Abzugshaube verbunden ist, verbunden werden, während die freie
Anschlußöffnung (8) des Hauptteiles (1) mit einem
weiteren Kanal oder mit der wandinneren Öffnung
eines Mauerkastens verbunden werden kann, der
beispielsweise Abluft nach außen befördern kann.

Fig. 4 zeigt den in Fig. 3 dargestellten Anschlußstutzen von oben, Fig. 5 zeigt ein anderen
Ausführungsbeispiel eines Anschlußstutzens mit
rechteckigem flachem Anschlußquerschnitt für die
freie Stutzenöffnung (9).

In Fig. 6 ist als weitere Ausführungsform der
Erfindung ein zusätzliches Paß- oder Reduzierstück
(10) dargestellt, das zunächst anstelle des Anschlußstutzens (4) auf den ringförmigen Rand (5)
aufgelegt und über entsprechende Paßhaken (13)
lösbar mit diesem verbunden werden kann, wobei
der Anschlußstutzen (4) anschließend mit einem
entsprechend dem Auflager (2) ausgebildeten Paßauflager (12) lösbar verbunden wird. Das Paß- oder
Reduzierstück (10) weist zu diesem Zweck einen
radial nach außen ragenden Paßrand (11) auf, der
mit dem Auflager (2) des Hauptteiles (1) des Anschlußstückes in Anlage kommt. Wie beim erstgenannten Ausführungsbeispiel sollte auch hier eine
gewisse Abdichtung gegeben sein, die entweder
schon materialbedingt ist oder aufgrund bestimmter
Dichtungen, beispielsweise in Form von Gummidichtungen oder Gummilippen, bewirkt werden
kann.

Fig. 7 zeigt den Querschnitt durch den in Fig. 6
gezeigten Paß-oder Anschlußstutzen (10) zur Verdeutlichung des speziellen Aufbaues desselben.

## Ansprüche

1. Anschlußstück für Kanäle, mit wenigstens
zwei Anschlußöffnungen, gekennzeichnet durch
   a) ein Auflager (2) an einer Anschlußöffnung
(3),
   b) einen kanalförmigen Anschlußstutzen (4)
mit einem dem Auflager (2) angepaßten ringförmigen Rand (5) an einer Stutzenöffnung (6) des Anschlußstutzens (4),
   c) Befestigungsmittel (7) für den Anschlußstutzen (4) am ringförmigen Auflager (2) des
Hauptteiles (1) des Anschlußstückes,

2. Anschlußstück nach Anspruch 1, dadurch
gekennzeichnet, daß das Auflager (2) einen im wesentlichen ringförmigen flachen Innenrand im Bereich einer Anschlußöffnung (3) aufweist, der sich
radial nach außen erstreckt und der sich am ringförmigen Rand in Form eines sich radial nach außen erstreckenden flachen Außenrandes (5) des Anschlußstutzens (4) anlegen kann.

3. Anschlußstück nach Anspruch 1 oder 2, dadurch gekennzeichnet, daß die Befestigungsmittel aus wenigstens zwei, vorzugsweise vier, vor dem Auflager (2) angeordneten und sich im wesentlichen parallel dazu radial nach innen erstreckenden Schnapphaken (7) bestehen, in welche der ringförmige Rand (5) des Anschlußsstutzens (4) eingreifen kann, wobei entweder der ringförmige Rand (5) oder die Schnapphaken (7) oder beide eine gewisse Elastizität aufweisen,

4. Anschlußstück nach Anspruch 3, dadurch gekennzeichnet, daß die Schnapphaken (7) einstückig mit dem Hauptteil (1) des Anschlußstückes ausgebildet sind.

5. Anschlußstück nach einem der Ansprüche 1 - 4, dadurch gekennzeichent, daß die Öffnungen des Hauptteiles (1) des Anschlußstückes den gleichen oder einen unterschiedlichen Querschnitt sowie gleiche oder unterschiedliche Querschnittsformen aufweisen, wobei die Anschlußöffnungen gleichachsig oder in Winkeln zueinander angeordnet sind.

6. Anschlußstück nach einem der Ansprüche 1 - 5, dadurch gekennzeichnet, daß die beiden Anschlußöffnungen (6,9) des Anschlußstutzens (4) unterschiedliche Form und unterschiedlichen Querschnitt aufweisen.

7. Anschlußstück nach einem der Ansprüche 1 - 6, gekennzeichnet durch ein zusätzliches Paß- oder Reduzierstück (10), dessen Außenteil einen dem ringförmigen Rand (5) des Anschlußstutzens (4) entsprechenden äußeren Paßrand (11) bildet, und dessen radial nach innen gerichteter Innenteil ein dem Auflager (2) des Anschlußstutzens (4) entsprechendes Paßauflager (12) für den ringförmigen Rand (5) eines Anschlußstutzens (4) bildet, wobei am Paßauflager (12) Befestigungsmittel für den Anschlußstutzen (4), vorzugsweise in Form einstückig mit diesem ausgebildeter Paßhaken (13), vorgesehen sind.

8. Anschlußstück nach einem der Ansprüche 1 - 7, dadurch gekennzeichnet, daß im Hauptteil (1) ein Lamellengitter (14) oder ein Ventilator vorgesehen ist.

9. Anschlußstück nach einem der Ansprüche 1 - 8, dadurch gekennzeichnet, daß als Material Kunststoff wie Polystyrol eingesetzt wird.

Fig.2

Fig.1

Fig.3

Fig.4

Fig.5

Fig.6

Fig.7

Fig. 3a

| Europäisches Patentamt | EUROPÄISCHER RECHERCHENBERICHT | Nummer der Anmeldung |
|---|---|---|
| | | EP 88 11 8724 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 901 076 (J. DEJAEGHERE)<br>* Seite 4; Figure 2 *<br>--- | 1,2,5 | F 16 L 25/00<br>F 24 F 13/02 |
| A | DE-U-8 700 090 (F. BURCHER)<br>* Seite 6, Absatz 2; Figuren 3,8 *<br>--- | 1,5,6 | |
| A | DE-U-8 501 868 (AXRAVERT AXIAL- UND RADIALVENTILATOREN GmbH)<br>* Seite 4; Figuren *<br>--- | 1,2,5,7 | |
| A | EP-A-0 002 197 (GEORG RÖHL LICHTTECHNISCHE SPEZIALFABRIK)<br>* Seite 3, Zeilen 11-13,22-25; Figuren *<br>--- | 1,5,9 | |
| A | US-A-2 799 518 (L.E. ANDERSON et al.)<br>* Figuren *<br>----- | 3 | |

**RECHERCHIERTE SACHGEBIETE (Int. Cl.4)**

F 16 L
F 24 F

Der vorliegende Recherchenbericht wurde für alle Patentansprüche erstellt

| Recherchenort | Abschlußdatum der Recherche | Prüfer |
|---|---|---|
| DEN HAAG | 13-03-1989 | BARTSCH A.W. |